# DEMANDE DE BREVET EUROPEEN

(11) **EP 1 879 421 A1**
(43) Date de publication de la demande: **16.01.2008**
(21) Numéro de dépôt: 07013682.5
(22) Date de dépôt: 12.07.2007
(51) Int. Cl.: H04Q 7/38, H04B 7/26

(54) **Système de téléphonie mobile directe, et téléphone mobile correspondant**

(30) Priorité: 12.07.2006 FR 0606392
(71) Demandeur: Sagem Communication S.A., 75015 Paris (FR)
(72) Inventeur: Dorion-Cousinat, Marc, 69009 Lyon (FR); De Graeve, Frédéric, 75017 Paris (FR); Dumont, Jérémie, 9119 Gif sur Yvette (FR)
(74) Mandataire: Maillet, Alain

(57) **Abrégé**

La présente invention concerne un système de téléphonie mobile directe, dans lequel au moins une station mobile émettrice émet, outre des données utilisateur, des informations de calage en fréquence et des informations de synchronisation à destination d'au moins une station mobile réceptrice pour qu'elle puisse se caler en fréquence et se synchroniser en temps. Ce système est caractérisé en ce que chaque station mobile réceptrice dudit système comporte des moyens pour réémettre les informations de calage en fréquence et les informations de synchronisation reçues de la station mobile émettrice qu'elle écoute.

La présente invention concerne également une station mobile d'un tel système de téléphonie mobile directe.

## Description

La présente invention concerne un système de téléphonie mobile directe, dans lequel au moins une station mobile émettrice émet, outre des données utilisateur, des informations de calage en fréquence et des informations de synchronisation à destination d'au moins une station mobile réceptrice pour qu'elle puisse se caler en fréquence et se synchroniser en temps.

La présente invention décrite ici concerne un système de téléphonie mobile du type à multiplexage à division de temps, dans lequel les données utilisateur sont émises par les stations mobiles émettrices dans des multitrames utilisateur constituées des intervalles de temps de même ordre d'une pluralité de trames successives et les informations de calage en fréquence et les informations de synchronisation dans au moins une multitrame système. Elle n'est cependant pas limitée à ce type.

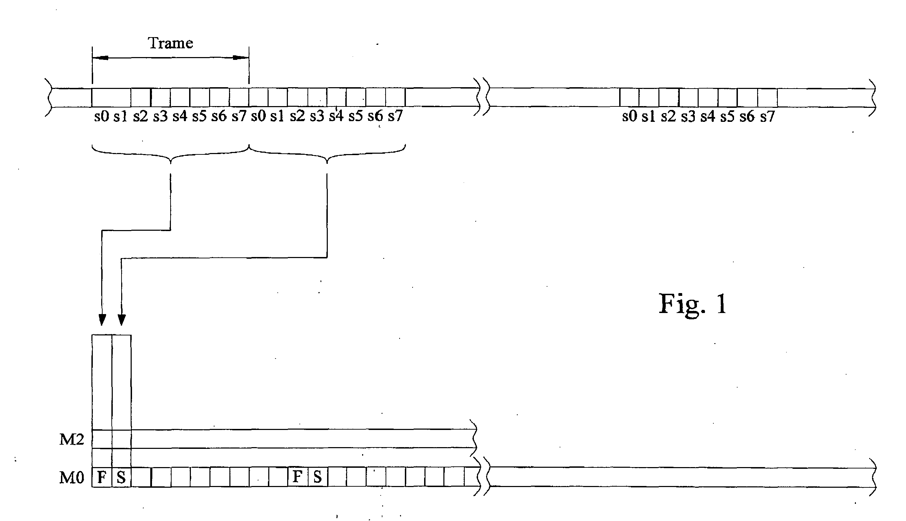

Pour en établir les concepts, on donne ci-dessous un exemple de système de téléphonie mobile du type à multiplexage à division de temps, en l'occurrence celui qui est défini dans les spécifications essentielles du système de téléphonie mobile dit GSM. Dans ce système, les informations échangées sont, de manière générale, transmises sous forme de données numériques dans des intervalles de temps (time slots : on utilisera le terme *slot* pour désigner un tel intervalle de temps car c'est le terme qui est utilisé par l'homme du métier. On l'écrira en italique pour toutefois marquer son origine anglo-saxone). On rappelle ci-dessous, en relation avec la Fig. 1, la structure de trame du système GSM.

Une trame TDMA est un ensemble constitué de huit *slots* successifs s0 à s7. Les *slots* d'un même ordre donné de plusieurs trames TDMA successives forment entre eux ce qui est appelé une multitrame d'une trame TDMA. Par exemple, à la Fig. 1, les *slots* s0 des trames successives forment la multitrame M0 et les *slots* s2 des trames successives forment la multitrame M2. Il existe deux structures de multitrame : celle regroupant 26 *slots* et celle regroupant 51 *slots.* Sont également définies dans les spécifications du système GSM, des structures de supcrtrame et d'hypertrame, mais elles ne sont pas considérées ici.

Pour la transmission des données utilisateur, une station mobile dispose de deux *slots* respectivement émis sur deux porteuses de fréquences différentes : l'une affectée à la transmission dans le sens montant (station mobile vers station de base) et l'autre affectée à la transmission dans le sens descendant (station de base vers station mobile). Ces données utilisateur peuvent être des données utiles et elles sont alors transmises dans des canaux logiques appelés TCH (Traffic CHannel) ou être des données de signalisation et elles sont alors transmises dans des canaux logiques appelés SDCCH. Des canaux logiques de contrôle peuvent accompagner ces canaux logiques : SACCH (Slow Associated Control CHannel) et FACCH (Fast Associated Control CHannel). Ces données étant spécifiques à l'utilisateur, les canaux logiques qui les portent sont dits canaux dédiés. Tous ces canaux logiques dédiés sont portés par les multitrames M à M7 (autres que la multitrame M0) que nous nommerons, dans la suite de la présente description, des multitrames utilisateur dès lors qu'elles sont dédiées à un utilisateur ou groupe d'utilisateurs susceptibles d'y lire les données utilisateur.

Pour permettre à une station mobile de se raccorder à la station de base la plus favorable, de s'y caler en fréquence et de s'y synchroniser, une voie balise, portée elle par la seule multitrame M0 d'une fréquence particulière parmi toutes les fréquences disponibles, est également mise en oeuvre. On rappelle ici que cette voie balise est émise, par chaque station de base du système, sur une fréquence particulière choisie parmi l'ensemble des porteuses attribuées à la station mobile concernée. Elle comprend les canaux logiques suivants émis en diffusion : le canal FCCH (Frequency Correction CHannel), le canal SCH (Synchronisation CHannel) et le canal BCCH (Broadcast Control CHannel). Le canal FCCH est émis dans le *slot* s0 de quelques trames prédéfinies, par exemple les seules trames 0, 10, 20, 30 et 40 d'une multitrame à 51 trames (voir les *slots* s0 de la multitrame M0 marqués d'un F à la Fig. 1). Le canal SCH est émis dans le *slot* s0 de la trame qui suit celle où a été émis le canal FCCH, par exemple dans les seules trames 1, 11, 21, 31 et 41 d'une multitrame à 51 trames (voir les *slots* s0 de la multitrame de voie balise M0 marqués d'un S à la Fig. 1).

Lorsqu'elle est mise sous tension, une station mobile scrute l'ensemble des porteuses qu'elle reçoit pour y chercher un signal qui correspond à un canal FCCH. Une fois celui-ci trouvé, elle peut, d'une part, ajuster la fréquence de la porteuse reçue, mais aussi, d'autre part, en déduire une position temporelle, si bien qu'elle peut se caler sur la trame reçue sur cette porteuse. Elle peut alors lire, à la trame suivante, dans le *slot* s0 correspondant, le canal SCH dans lequel elle trouvera toutes les informations nécessaires pour parfaire son calage et sa synchronisation temporelle sur les trames. Elle peut alors lire le canal BCCH qui la renseignera sur les caractéristiques de la station de base avec laquelle elle est synchronisée et les méthodes pour y accéder, ainsi que les caractéristiques et méthodes des stations de base voisines.

Dans cet état, la station mobile peut déclencher l'établissement d'une connexion, normalement par accès au canal commun RACH ou répondre à un signal de paging présent sur le canal PCH.

Une fois la connexion établie pour la transmission de données, la station mobile reçoit les canaux communs FCCH, SCH et BCCH non seulement de la station de base avec laquelle elle est raccordée mais aussi des stations de base voisines. Elle peut ainsi, selon les circonstances, se raccorder à la station de base la plus favorable au moment considéré.

On notera que les canaux logiques de la voie balise FCCH, SCH et BCCH sont des canaux descendants, c'est-à-dire qu'ils sont exclusivement émis en diffusion par une station de base à destination de stations mobiles. Ils sont généralement émis dans la multitrame M0 que nous appellerons dans la suite de la description la multitrame système par opposition aux multitrames utilisateur.

Dans le cas du système de téléphonie mobile directe objet de la présente invention, il n'y a pas utilisation de stations de base. Cependant, deux stations mobiles d'un tel système doivent, pour pouvoir communiquer entre elles, travailler sur une même fréquence et être temporellement synchronisées entre elles. Ainsi, une station mobile émettrice doit émettre non seulement ses données utilisateur mais aussi des informations de calage en fréquence et de synchronisation. Selon un exemple de réalisation particulier qui reprend pour l'essentiel la structure de trames et multitrames du système de téléphonie mobile GSM, elle émet ses données utilisateur sur un canal porté par l'une des multitrames utilisateur M1 à M7 et les informations de calage en fréquence F et de synchronisation S dans la multitrame M0 dite par la suite multitrame système. De plus, elle indique dans cette multitrame système quelle multitrame utilisateur elle utilise pour transmettre les données utilisateur.

Une station mobile réceptrice, à portée de la station mobile émettrice, reçoit les informations de calage en fréquence et de synchronisation que celle-ci émet et peut donc se caler en fréquence et se synchroniser temporellement avec elle. Dans l'exemple de réalisation particulier donné ci-dessus, elle recevra les informations de calage en fréquence F et de synchronisation S ainsi que les informations concernant-la multitrame utilisateur utilisée émises dans la multitrame système M0.

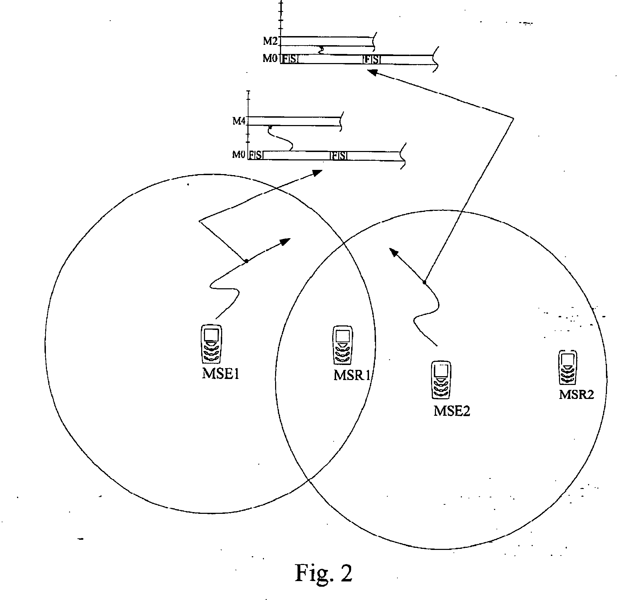

A la Fig. 2, on voit une station mobile émettrice MSE1 dont la portée est délimitée par un cercle dont elle est le centre. On voit également une station mobile réceptrice MSR1 à portée de la station mobile MSE1, qui reçoit donc les informations de calage en fréquence F et de synchronisation S que celle-ci émet et qui peut donc se synchroniser avec elle. Plus précisément, dans le cas de l'exemple de réalisation particulier donné ci-dessus, la station mobile émettrice MSE1 émet les informations de calage en fréquence F et de synchronisation S ainsi que des informations relatives à la multitrame utilisateur utilisée, en l'occurrence M4, émises dans la multitrame système M0, informations que la station mobile MSR1 peut recevoir pour pouvoir lire les données utilisateur émises par la station mobile MSE1.

Le problème que cherche à résoudre la présente invention est le suivant, illustré au moyen de la Fig. 2. Une station mobile MSE2 qui souhaite établir un appel pour émettre, par exemple à destination d'une station mobile MSR2 mais pas à destination de la station mobile MSR1, et qui n'est pas à la portée de la station mobile MSE1 ne reçoit donc pas les informations de calage en fréquence et de synchronisation émises par la station mobile MSE1. Elle peut donc, *a priori,* choisir parmi l'ensemble des fréquences disponibles du système n'importe quelle fréquence et, de plus, émettre au temps qu'elle désire. Par exemple, la station mobile MSE2 émet les informations de calage en fréquence F et de synchronisation S ainsi que les informations concernant la multitrame utilisateur utilisée, en l'occurrence M2, émises dans une multitrame système M0 qui n'est généralement pas synchronisée avec la multitrame système M0 émise par la station mobile MSE1, comme cela est visible dans les deux diagrammes dans la partie haute de la Fig. 2. Ainsi, la station mobile MSR1 qui est à la fois à portée de la station mobile MSE1 et de la station mobile MSE2 reçoit à la fois les signaux émis respectivement par ces deux stations mobiles MSE1 et MSE2, signaux qui ne sont pas synchronisés et qui peuvent donc mutuellement interférer. Il en résulte que la station mobile MSR1 est alors incapable de recevoir correctement les données utilisateur que seule la station mobile MSE1 souhaitait lui transmettre.

Le but de la présente invention est donc de proposer un système de téléphonie mobile directe, dans lequel au moins une station mobile émettrice émet, outre des données utilisateur, des informations de calage en fréquence et des informations de synchronisation à destination d'au moins une station mobile réceptrice pour qu'elle puisse se caler en fréquence et se synchroniser en temps, qui résolve le problème mentionné ci-dessus.

Pour ce faire, ledit système est caractérisé en ce que chaque station mobile réceptrice dudit système comporte des moyens pour réémettre les informations de calage en fréquence et les informations de synchronisation reçues de la station mobile émettrice qu'elle écoute.

Selon une autre caractéristique de la présente invention, chaque station mobile réceptrice dudit système comporte des moyens pour également émettre des informations d'accusé d'écoute relatives à la communication qu'elle écoute.

Selon-une autre caractéristique de la présente invention, les informations de calage en fréquence et les informations de synchronisation sont émises périodiquement par les stations mobiles émettrices, et les informations de calage en fréquence et les informations de synchronisation sont réémises par une station mobile réceptrice de manière superposée aux informations de calage en fréquence et aux informations de synchronisation émises par la station mobile émettrice qu'elle écoute.

Selon une variante de réalisation, les informations de calage en fréquence et les informations de synchronisation, ainsi qu'éventuellement les informations d'accusé d'écoute sont émises par une station mobile réceptrice à chaque période d'émission de la station mobile émettrice qu'elle écoute.

Selon une autre variante de réalisation, les informations de calage en fréquence et les informations de synchronisation, ainsi qu'éventuellement les informations d'accusé d'écoute ne sont émises par une station mobile réceptrice qu'à certaines périodes d'émission de la station mobile émettrice qu'elle écoute.

Selon une autre variante de réalisation, les informations de calage en fréquence et les informations de synchronisation, ainsi qu'éventuellement les informations d'accusé d'écoute ne sont émises par une station mobile réceptrice que lorsque ladite station mobile réceptrice est perturbée par une station mobile émettrice autre que celle qu'elle écoute.

La présente invention concerne également un système de téléphonie mobile tel qu'il vient d'être décrit mais qui est du type à multiplexage à division de temps, dans lequel les données utilisateur sont émises par les stations mobiles émettrices dans des multitrames utilisateur constituées des intervalles de temps de même ordre d'une pluralité de trames successives et les informations de calage en fréquence et les informations de synchronisation dans au moins une multitrame système. Il est alors caractérisé en ce que les informations de calage en fréquence et les informations de synchronisation sont respectivement réémises par une station mobile réceptrice dans tous les/certains des intervalles de temps de la multitrame système correspondant à ceux de la multitrame système portant les informations de calage en fréquence et les informations de synchronisation émises par la station mobile émettrice qu'elle écoute.

Selon une autre caractéristique de la présente invention, chaque station mobile dudit système comporte des moyens pour également émettre des informations d'accusé d'écoute relatives à la multitrame utilisateur qu'elle écoute.

Selon -une autre caractéristique de la présente invention, lesdites informations d'accusé d'écoute occupent au moins un intervalle de temps spécifique de la ou des multitrames système.

Selon une autre caractéristique de la présente invention, les informations de calage en fréquence et les informations de synchronisation, et éventuellement les informations d'accusé d'écoute, ne sont émises par une station mobile réceptrice que lorsque ladite station mobile réceptrice est perturbée par une station mobile émettrice autre que celle qu'elle écoute.

Selon une première variante de réalisation de la présente invention, les informations de calage en fréquence et les informations de synchronisation et éventuellement les informations d'accusé d'écoute, sont émises par une station mobile réceptrice à intervalles de temps réguliers ou irrégulicrs.

La présente invention concerne également une station mobile qui comporte des moyens qui la rendent apte à jouer le rôle d'une station mobile réceptrice d'un système de téléphonie mobile directe tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints dans lesquels :
La Fig. 1 montre la structure de trames et multitrames d'un système de téléphonie mobile tel que celui qui est dénommé GSM,
La Fig. 2 montre les communications respectives entre deux stations mobiles émettrices et deux stations mobiles réceptrices et, par les diagrammes de trames et multitrames, les signaux qu'elles échangent entre elles respectivement, la Fig. 2 illustrant le problème que cherche à résoudre la présente invention,

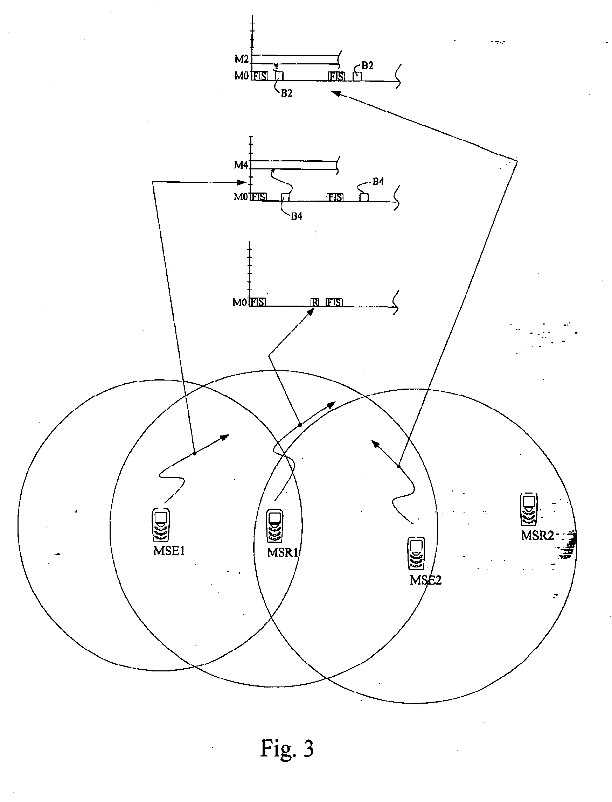

La Fig. 3 montre, à l'instar de la Fig. 2, les communications respectives entre deux stations mobiles émettrices et deux stations mobiles réceptrices et, par les diagrammes de trames et multitrames, les signaux qu'elles échangent entre elles respectivement, mais cette fois-ci dans le cadre de la présente invention,

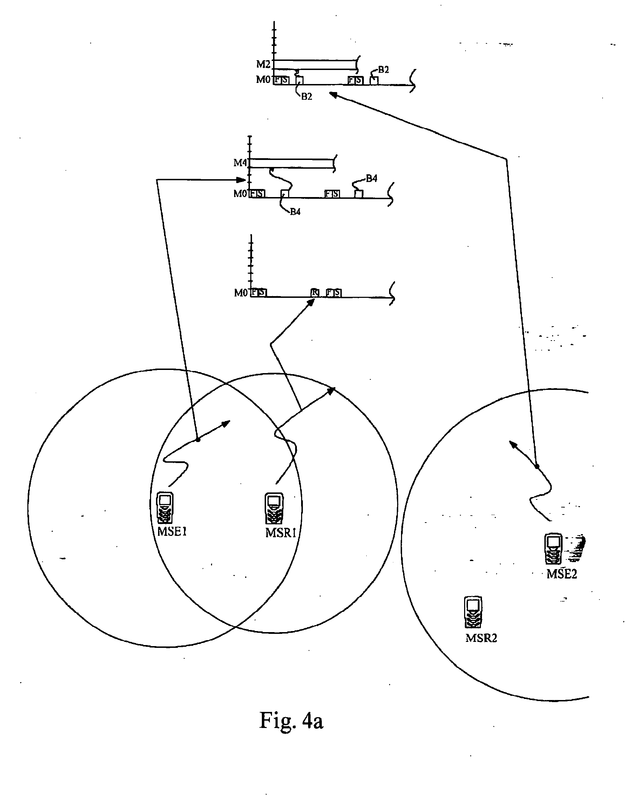

Les Figs. 4a à 4d illustrent, selon un premier mode de réalisation dudit système de l'invention, les communications respectives entre deux stations mobiles émettrices et deux stations mobiles réceptrices et, par les diagrammes de trames et multitrames, les signaux qu'elles échangent entre elles respectivement, et ce lorsqu'une station mobile émettrice et la station mobile réceptrice qu'elle écoute se déplacent vers les autres stations mobiles émettrice et réceptrice,

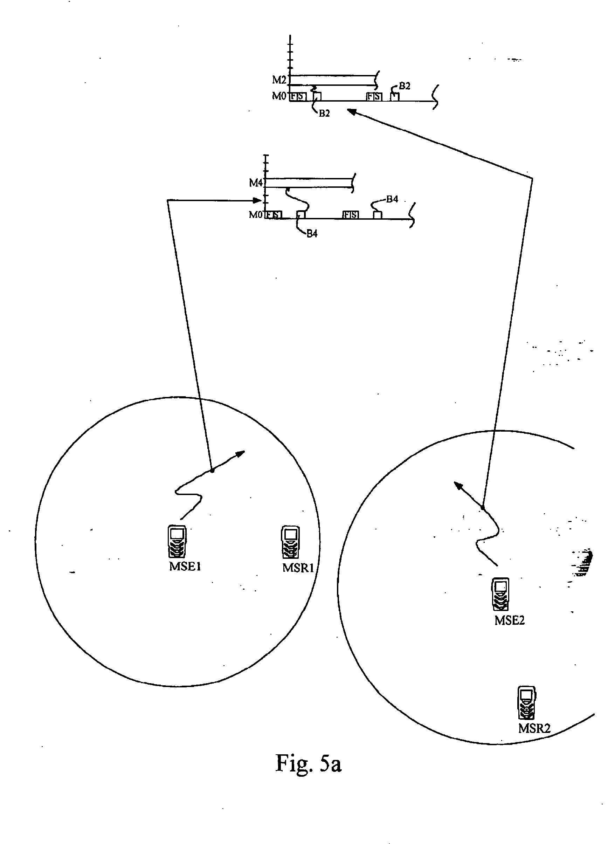

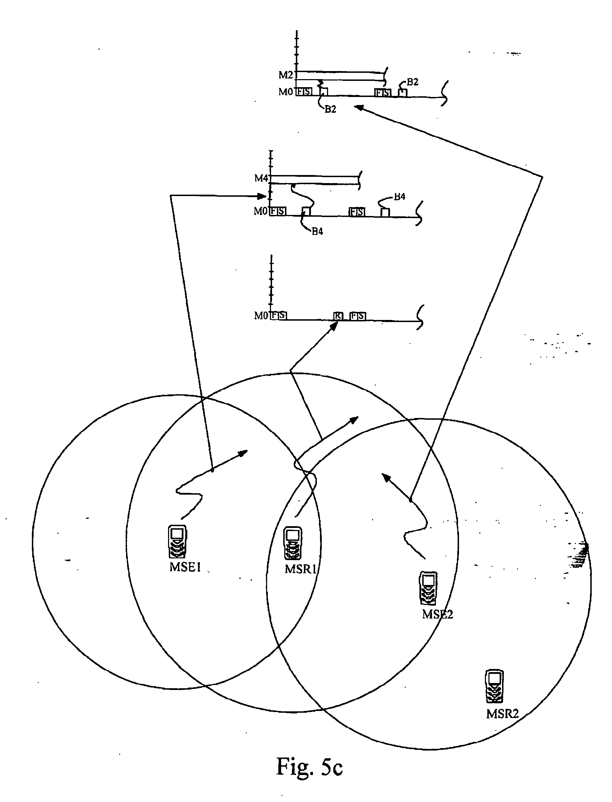

Les Figs. 5a à 5c illustrent, selon un second mode de réalisation dudit système de l'invention, les communications respectives entre deux stations mobiles émettrices et deux stations mobiles réceptrices et, par les diagrammes de trames et multitrames, les signaux qu'elles échangent entre elles respectivement, et ce lorsqu'une station mobile émettrice et la station mobile réceptrice qu'elle écoute se déplacent vers les autres stations mobiles émettrice et réceptrice, et

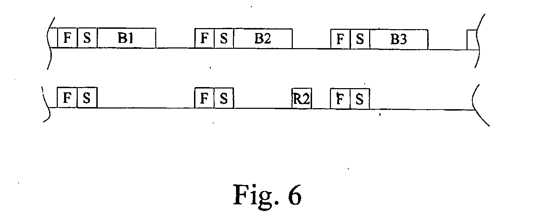

La Fig. 6 est un exemple de réalisation d'une multitrame système d'un système de téléphonie mobile directe selon la présente invention.

A la Fig. 3, on voit, à l'instar de la Fig. 2, une station mobile émettrice MSE1 et une station mobile réceptrice MSR1, à portée de la station mobile MSE1, qui reçoit donc les informations de calage en fréquence et de synchronisation que celle-ci émet et qui peut donc se synchroniser avec elle.

Selon un exemple de réalisation particulier de la présente invention qui reprend pour l'essentiel la structure de trames et multitrames du système de téléphonie mobile GSM, la station mobile émettrice MSE1 émet les informations de calage en fréquence F et de synchronisation S ainsi que les informations de multitrame utilisateur, ici référencées B4, relatives à la multitrame utilisateur utilisée, en l'occurrence M4, ainsi que la méthode d'accès à cette multitrame dédiée. Ces informations de multitrame utilisateur sont émises dans une multitrame système M0 et sont reçues par la station mobile MSR1 qui peut alors se mettre à l'écoute de la multitrame utilisateur M4 et ainsi lire les données utilisateur émises par la station mobile MSE1 dans cette multitrame utilisateur M4.

On remarquera qu'en dehors des moments où elle émet les informations de calage en fréquence F, les informations de synchronisation S et les informations de multitrame utilisateur R4 concernant la multitrame utilisateur utilisée, ainsi que les données utilisateur dans la multitrame M4, la station mobile MSE1 n'émet aucun signal, contrairement à ce qui se passe dans le standard GSM où en dehors de ces moments, des données de bourrage sont émises.

Selon la présente invention, la station mobile réceptrice MSR1, qui peut se synchroniser avec la station mobile MSR1, réémet les informations de calage en fréquence F et de synchronisation S. Du fait qu'elles sont réémises en même temps que ces mêmes informations émises par la station mobile MSE1, (qu'elles sont en quelque sorte superposées à celles émises par la station mobile MSE1), ces informations ne sont pas perturbées.

On notera que les stations mobiles sont équipées de moyens qui permettent de s'affranchir des retards différents et donc des déphasages qui affectent les signaux reçus par une station mobile d'une autre station mobile selon le trajet que ces signaux suivent. Ces moyens sont utilisés par l'invention, notamment par une station mobile émettrice, pour s'affranchir des éventuels déphasages entre les signaux portant les informations de calage en fréquence F et de synchronisation S reçus de deux stations mobiles réceptrices à l'écoute de cette même station mobile émettrice.

Une station mobile MSE2 qui souhaite établir un appel pour émettre, par exemple à destination d'une station mobile MSR2 mais pas à destination de la station mobile MSR1, et qui, au moment de cet établissement d'appel, n'est pas à portée de la station mobile MSE1 mais à celle de la station mobile MSR1, reçoit les informations de calage en fréquence F et de synchronisation S émises par la station mobile MSR1. Elle peut donc se caler en fréquence et se synchroniser en temps, grâce à ces informations, avec la station mobile MSR1. Il en résulte qu'elle pourra émettre ses propres informations de calage en fréquence F et de synchronisation S en même temps que ces mêmes informations émises par la station mobile MSR1, si bien que cette dernière ne sera pas perturbée par la station mobile MSE2.

On remarquera que les diagrammes de trames et de multitrames dans la partie haute de la Fig. 3 sont alignés montrant par là la synchronisation des stations mobiles MSE1, MSR1 et MSE2.

Selon une autre caractéristique de l'invention, la station mobile réceptrice MSR1 émet, en plus des informations de calage en fréquence F et de synchronisation S, une information d'accusé d'écoute Rj (en l'occurrence R4) selon laquelle elle est en communication avec une station mobile émettrice dont elle reçoit les données utilisateur par une multitrame dédiée donnée Mj, en l'occurrence la multitrame M4 (on dira aussi qu'elle est à l'écoute de cette station mobile émettrice). L'émission de toute information d'accusé d'écoute Rj (j= 1 à 7) par une station mobile réceptrice a lieu pendant une partie de la multitrame système M0 où ni la station mobile MSE1 ni la station mobile MSE2 n'émettent si bien que les signaux portant cette information ne sont pas perturbés. Cette information d'accusé d'écoute R4, qui peut être reçue par la station mobile MSE2, sert à celle-ci lors de la sélection de la multitrame utilisateur qui va être utilisée pour émettre les données utilisateur à destination de la station mobile MSR2 afin que cette dernière ne choisisse précisément pas la même multitrame utilisateur, en l'occurrence la multitrame utilisateur M4, que celle utilisée par la station mobile MSE1. Dans l'exemple donné à la Fig. 3, comme cela est visible dans le diagramme de trames et multitrames supérieur, la multitrame utilisateur choisie par la station mobile émettrice MSE2 est la multitrame dédiée M2.

On ne l'a pas représentée à la Fig. 3, mais la station mobile MSR2 émet également une information d'accusé d'écoute.

A la Fig. 4a, on peut voir une station mobile émettrice MSE1 en communication avec une station réceptrice MSR1. La station émettrice MSE1 émet conformément au diagramme de trames et de multitrames inférieur dans la partie haute de la Fig. 4a. On peut également voir une station mobile émettrice MSE2 émettant à destination d'une station réceptrice MSR2 conformément au diagramme de trames et de multitrames supérieur dans la partie haute de la Fig. 4a.

On notera que les stations mobiles émettrices MSE1 et MSE2 ne sont pas nécessairement synchronisées, ce que l'on peut remarquer d'après le décalage entre leurs diagrammes de trames et multitrames respectifs.

Quant à la station mobile réceptrice MSR1, elle réémet les informations de calage F et de synchronisation S ainsi que les informations d'accusé d'écoute R4. Il en est de même de la station mobile réceptrice MSR2, bien que cela ne soit pas représenté pour une meilleure lisibilité de la Fig. 4a.

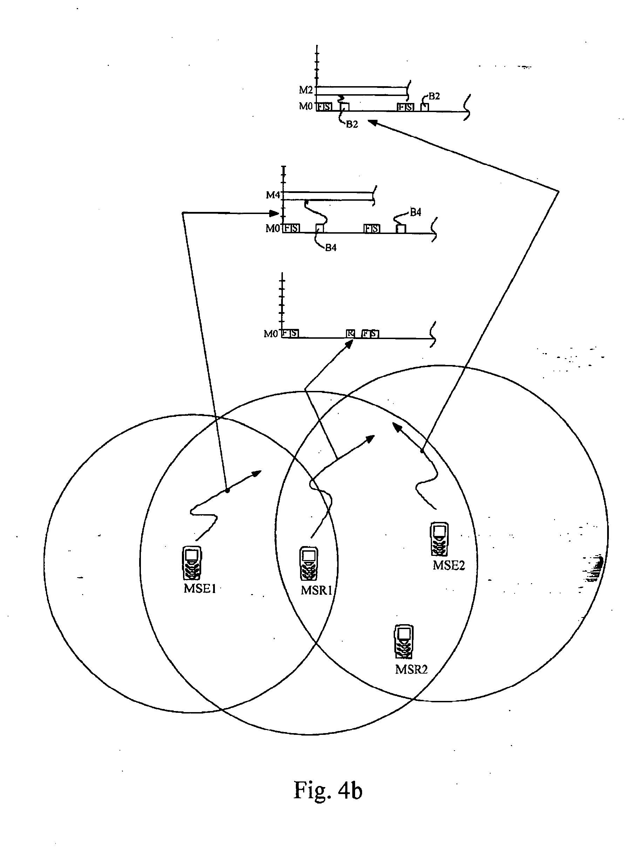

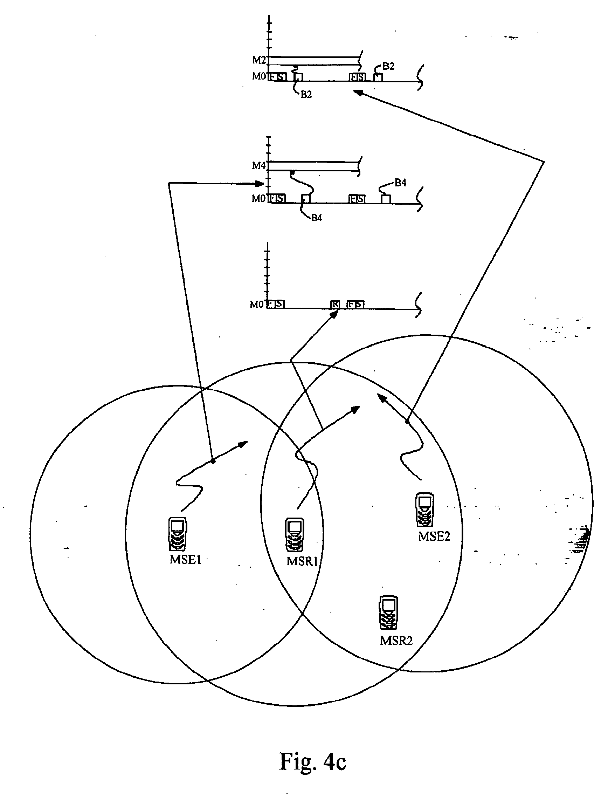

A la Fig. 4b, du fait qu'elle s'est déplacée, la station mobile MSE2 devient à la portée de la station mobile réceptrice MSR1 et, dans un premier temps, est perturbée par l'émission de cette dernière, ces stations mobiles MSR1 et MSE2 n'étant pas synchronisées. Dans un second temps, la station mobile MSE2 stoppe sa communication en cours avec la station mobile réceptrice MSR2 puis la ré-établit tout en se synchronisant avec les informations de calage en fréquence F, de synchronisation S et tout en choisissant une multitrame dédiée au moyen de l'accusé d'écoute R émis par la station mobile réceptrice MSR1, à l'instar de ce qui se passe à la Fig. 3. C'est ce qui est visible à la Fig. 4c.

Du fait qu'elles peuvent être à la portée l'une de l'autre, deux stations mobiles réceptrices en communication avec deux stations mobiles émettrices différentes non synchronisées peuvent avoir leurs réémissions respectives des informations de calage en fréquence F et de synchronisation ainsi que des informations d'accusé d'écoute Rj qui soient perturbées mutuellement. Or, dans la pratique, les émissions de ces stations mobiles réceptrices sont de relativement courtes durées si bien que, statistiquement, elles ont en réalité peu de chance d'être perturbées mutuellement.

Selon une caractéristique alternative, afin de diminuer encore la probabilité de perturbation mutuelle, une station mobile réceptrice, telle que la station MSR1, ne réémet les informations de calage en fréquence F et de synchronisation S, ainsi que les informations d'accusé d'écoute Rj que de manière sporadique, par exemple soit de manière aléatoire, soit une multitrame tous les n multitrames, etc.

Selon un mode de réalisation particulier, une station mobile réceptrice, telle que la station mobile MSR1, ne réémet les informations de calage en fréquence F et de synchronisation S, ainsi que les informations d'accusé d'écoute Rj, quc lorsqu'elle est perturbée par une station mobile émettrice autre que celle qu'elle écoute. On va illustrer par les Figs. 5a à 5c les avantages qui en résultent.

A la Fig. 5a, on peut voir une station mobile émettrice MSE1 en communication avec une station réceptrice MSR1. La station émettrice MSE1 émet conformément au diagramme de trames et de multitrames inférieur dans la partie haute de la Fig. 5a. On peut également voir une station mobile émettrice MSE2 émettant à destination d'une station réceptrice MSR2 conformément au diagramme de trames et de multitrames supérieur dans la partie haute de la Fig. 5a.

On notera que les stations mobiles émettrices MSE1 et MSE2 ne sont pas nécessairement synchronisées, comme cela est visible par les diagrammes de trames et multitrames dans la partie haute de la Fig. 5a. La station mobile MSR1, en particulier, puisqu'elle n'est pas perturbée par une station mobile émettrice, ne réémet pas les informations de calage F et de synchronisation S et n'émet pas non plus les informations d'accusé d'écoute R4.

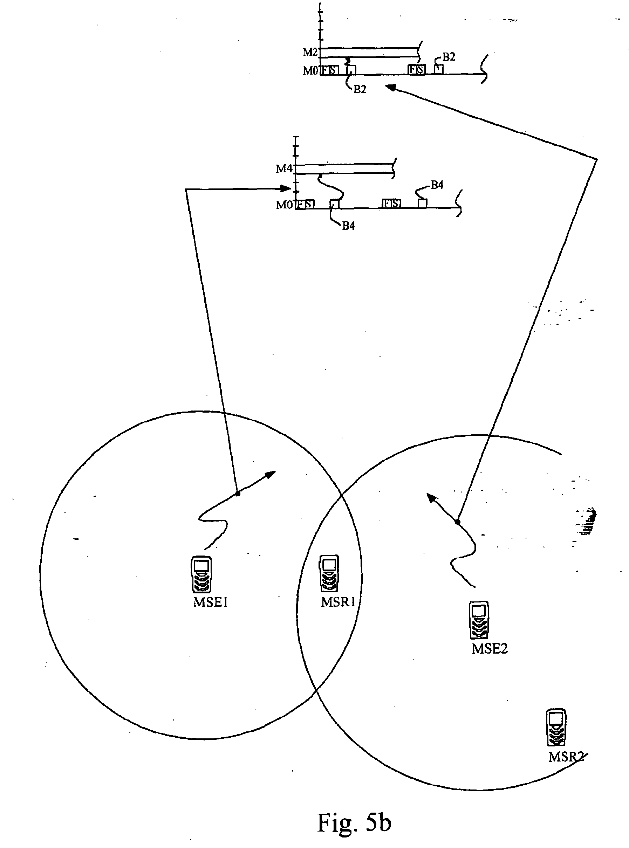

A la Fig. 5b, du fait que la station mobile MSE2 s'est déplacée, la station mobile MSR1 devient à portée de la station mobile émettrice MSE2. Du fait que les stations mobiles MSE1 et MSE2 ne sont pas synchronisées, la station mobile MSR1 est perturbée par la station mobile MSE2, mais cette dernière ne peut le savoir.

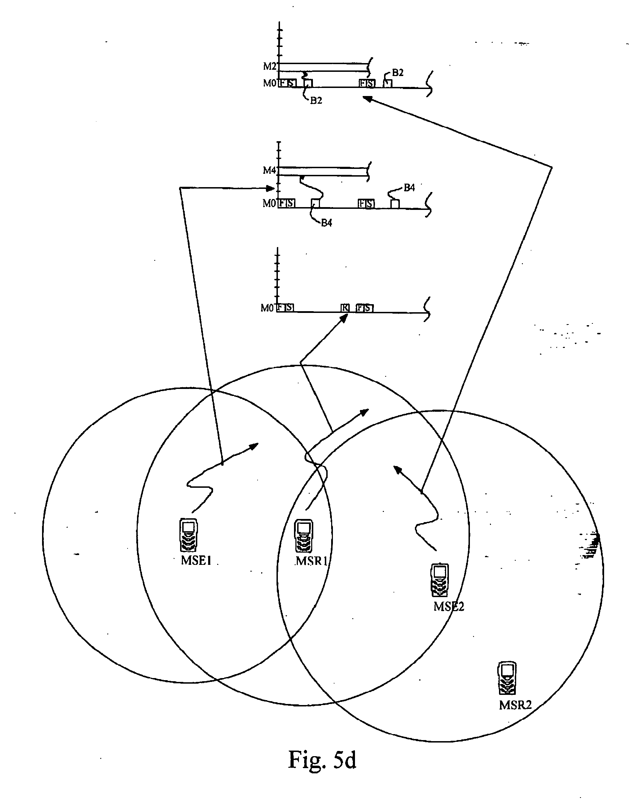

A la Fig. 5c, la station mobile réceptrice MSR1 réémet alors les informations de calage en fréquence F et de synchronisation S, ainsi que les informations d'accusé d'écoute R4, de manière synchronisée à la station mobile émettrice MSE1 puisque c'est celle qu'elle écoute. La station mobile émettrice MSE2 est alors elle-même perturbée et envisage alors de se synchroniser avec la station mobile réceptrice MSR1, ce qui est réalisé à la Fig. 5d où l'on voit, dans la partie supérieure, l'alignement des diagrammes de trames et de multitrames.

On donne à la Fig. 6, un exemple de multitrame de voie balise M0 telle qu'elle est émise par une station mobile émettrice MSE, dans la partie supérieure de cette Fig., et telle qu'elle est émise par une station mobile réceptrice MSR, laquelle est en écoute de la multitrame dédiée M2. F et S représentent les informations de calage en fréquence et les informations de synchronisation. Les informations d'accès à une multitrame dédiée Mi sont notées Bi et les informations d'accusé d'écoute d'une multitrame dédiée Mj sont notées Rj. La ligne de base de chacun des deux diagrammes, lorsqu'elle n'est pas surmontée d'informations, ne correspond à aucune émission.

## Revendications

1. Système de téléphonie mobile directe, dans lequel au moins une station mobile émettrice émet, outre des données utilisateur, des informations de calage en fréquence et des informations de synchronisation à destination d'au moins une station mobile réceptrice pour qu'elle puisse se caler en fréquence et se synchroniser en temps, **caractérisé en ce que** chaque station mobile réceptrice dudit système comporte des moyens pour réémettre les informations de calage en fréquence et les informations de synchronisation reçues de la station mobile émettrice qu'elle écoute de manière superposée aux informations de calage en fréquence et aux informations de synchronisation émises par ladite station mobile émettrice qu'elle écoute.

2. Système de téléphonie mobile selon la revendication 1, **caractérisé en ce que** chaque station mobile réceptrice dudit système comporte des moyens pour également émettre des informations d'accusé d'écoute relatives à la communication qu'elle écoute.

3. Système de téléphonie mobile selon la revendication 1 ou 2, **caractérisé en ce que** les informations de calage en fréquence et les informations de synchronisation sont émises périodiquement par les stations mobiles émettrices.

4. Système de téléphonie mobile selon la revendication 3, **caractérisé en ce que** les informations de calage en fréquence et les informations de synchronisation, ainsi qu'éventuellement les informations d'accusé d'écoute, sont émises par une station mobile réceptrice à chaque période d'émission de la station mobile émettrice qu'elle écoute.

5. Système de téléphonie mobile selon une des revendications 1 à 3, **caractérisé en ce que** les informations de calage en fréquence et les informations de synchronisation, ainsi qu'éventuellement les informations d'accusé d'écoute, ne sont émises par une station mobile réceptrice qu'à certaines périodes d'émission de la station mobile émettrice qu'elle écoute.

6. Système de téléphonie mobile selon une des revendications précédentes, **caractérisé en ce que** les informations de calage en fréquence et les informations de synchronisation, ainsi qu'éventuellement les informations d'accusé d'écoute, ne sont émises par une station mobile réceptrice que lorsque ladite station mobile réceptrice est perturbée par une station mobile émettrice autre que celle qu'elle écoute.

7. Système de téléphonie mobile selon la revendication 1, du type à multiplexage à division de temps, dans lequel les données utilisateur sont émises par les stations mobiles émettrices dans des multitrames utilisateur constituées des intervalles de temps de même ordre d'une pluralité de trames successives et les informations de calage en fréquence et les informations de synchronisation dans au moins une multitrame système, **caractérisé en ce que** les informations de calage en fréquence et les informations de synchronisation sont respectivement réémises par une station mobile réceptrice dans tous les/certains des intervalles de temps de la multitrame système correspondant à ceux de la multitrame système portant les informations de calage en fréquence et les informations de synchronisation émises par la station mobile émettrice qu'elle écoute.

8. Système de téléphonie mobile selon la revendication 7, **caractérisé en ce que** chaque station mobile dudit système comporte des moyens pour également émettre des informations d'accusé d'écoute relatives à la multitrame utilisateur qu'elle écoute.

9. Système de téléphonie mobile selon la revendication 8, **caractérisé en ce que** lesdites informations d'accusé d'écoute occupent au moins un intervalle de temps spécifique de la ou des multitrames système.

10. Système de téléphonie mobile selon une des revendications 7 à 9, **caractérisé en ce que** les informations de calage en fréquence et les informations de synchronisation, et éventuellement les informations d'accusé d'écoute, ne sont émises par une station mobile réceptrice que lorsque ladite station mobile réceptrice est perturbée par une station mobile émettrice autre que celle qu'elle écoute.

11. Système de téléphonie mobile selon une des revendications 7 à 10, **caractérisé en ce que** les informations de calage en fréquence et les informations de synchronisation, et éventuellement les informations d'accusé d'écoute, sont émises par une station mobile réceptrice à intervalles de temps réguliers ou irréguliers.

12. Station mobile d'un système de téléphonie mobile directe, dans lequel au moins une station mobile émettrice émet, outre des données utilisateur, des informations de calage en fréquence et des informations de synchronisation à destination d'au moins une station mobile réceptrice pour qu'elle puisse se caler en fréquence et se synchroniser en temps, **caractérisée en ce qu'**elle comporte des moyens pour réémettre les informations de calage en fréquence et les informations de synchronisation reçues d'une station mobile émettrice qu'elle écoute de manière superposée aux informations de calage en fréquence et aux informations de synchronisation émises par ladite station mobile émettrice qu'elle écoute.

13. Station mobile selon la revendication 12, **caractérisée en ce qu'**elle comporte des moyens pour également émettre des informations d'accusé d'écoute relatives à la communication qu'elle écoute.

14. Station mobile selon la revendication 12 ou 13, **caractérisée en ce qu'**elle émet les informations de calage en fréquence et les informations de synchronisation, ainsi qu'éventuellement les informations d'accusé d'écoute à chaque période d'émission de la station mobile émettrice qu'elle écoute.

15. Station mobile selon la revendication 12 ou 13, **caractérisée en ce qu'**elle n'émet les informations de calage en fréquence et les informations de synchronisation, ainsi qu'éventuellement les informations d'accusé d'écoute, qu'à certaines périodes d'émission d'une station mobile émettrice qu'elle écoute.

16. Station mobile selon une des revendications 12 à 15, **caractérisée en ce qu'**elle émet les informations de calage en fréquence et les informations de synchronisation, ainsi qu'éventuellement les informations d'accusé d'écoute, uniquement que lorsqu'elle est perturbée par une station mobile émettrice autre que celle qu'elle écoute.

17. Station mobile selon la revendication 12, d'un système de téléphonie mobile directe du type à multiplexage à division de temps, dans lequel les données utilisateur sont émises par les stations mobiles émettrices dans des multitrames utilisateur constituées des intervalles de temps de même ordre d'une pluralité de trames successives et les informations de calage en fréquence et les informations de synchronisation dans au moins une multitrame système, **caractérisée en ce qu'**elle réémet les informations de calage en fréquence et les informations de synchronisation dans tous les/certains des intervalles de temps de la multitrame système correspondant à ceux de la multitrame système portant les informations de calage en fréquence et les informations de synchronisation émises par la station mobile émettrice qu'elle écoute.
